**Europäisches Patentamt**

**European Patent Office**

**Office européen des brevets**

(11) Veröffentlichungsnummer : **0 134 255 B2**

(12) **NEUE EUROPÄISCHE PATENTSCHRIFT**

(45) Veröffentlichungstag der neuen Patentschrift :
**16.09.92 Patentblatt 92/38**

(21) Anmeldenummer : **83107486.9**

(22) Anmeldetag : **29.07.83**

(51) Int. Cl.⁵ : **B62D 65/00,** B60S 13/00

(54) **Fördereinrichtung mit auf Förderbahnen bewegten Auflagen.**

(43) Veröffentlichungstag der Anmeldung :
**20.03.85 Patentblatt 85/12**

(45) Bekanntmachung des Hinweises auf die
Patenterteilung :
**16.04.86 Patentblatt 86/16**

(45) Bekanntmachung des Hinweises auf die
Entscheidung über den Einspruch :
**16.09.92 Patentblatt 92/38**

(84) Benannte Vertragsstaaten :
**DE**

(56) Entgegenhaltungen :
**DE-A- 3 147 784**
**FR-A- 2 215 368**
**US-A- 1 772 735**

(73) Patentinhaber : **CARL SCHENCK AG**
**Landwehrstrasse 55 Postfach 40 18**
**W-6100 Darmstadt (DE)**

(72) Erfinder : **Zschau, Siegfried**
**Am Bangert 4**
**W-6101 Modautal 2 (DE)**

(74) Vertreter : **Dallhammer, Herbert, Dipl.-Ing.**
**CARL SCHENCK AG Patentabteilung Postfach**
**4018 Landwehrstrasse 55**
**W-6100 Darmstadt (DE)**

## Beschreibung

Die Erfindung betrifft eine Fördereinrichtung mit auf Förderbahnen bewegten, angetriebenen Mitnehmern zum Transport zu prüfender Kraftfahrzeuge zwischen Prüfständen.

Bei der Herstellung von Kraftfahrzeugen ist es erforderlich, je nach Fertigungsstand und insbesondere nach der Fertigung Prüfungen am Kraftfahrzeug durchzuführen im Hinblick auf dessen Federung, Fahrverhalten und Leistungsfähigkeit. Hierzu sind die einzelnen Aggregate, wie Motor, Getriebe, Radaufhängung, Räder, Federungsverhalten, Lenkverhalten und Schwingungsverhalten zu prüfen. Diese Prüfung geschieht im wesentlichen in Rollprüfständen, wobei das Fahrzeug mit seinen Rädern auf Prüfrollen aufsteht und entweder über die angetriebenen Fahrzeugräder eine Prüfrolle oder ein Prüfrollenpaar antreibt oder die Prüfrolle oder das Prüfrollenpaar die Fahrzeugräder antreiben oder abbremsen. Entsprechend den Prüfungen, die durchzuführen sind, kennt man verschiedene Arten von Prüfständen, so zum Warmfahren des Fahrzeuges, zum Einfahren des Fahrzeuges, Bremsenprüfstände, Achseinstellprüfstände um Spur und Sturz des fertiggestellten Fahzeuges überprüfen zu können, Prüfstände um das Lenkmoment und den Lenkausschlag festzustellen, Prüfstände zur Scheinwerferprüfung, zur Abgasmessung, zur Abgaseinstellung, entsprechend den nationalen und internationalen Bestimmungen und Rüttelprüfstände.

Die Verkettung derartiger Prüfstände geschieht mittels Förderbahnen auf denen die fertiggestellten Kraftfahrzeuge entlang bewegt werden, jedoch vor dem Prüfstand die Förderbahn verlassen und mit eigenem Antrieb in den Prüfstand einfahren oder mit Hilfe einer Greifereinrichtung (DE-A-31 32 177) in den Prüfstand hineingeschleppt werden. Beide Möglichkeiten, einen Prüfstand zu beschicken haben die nachfolgend ausgeführten Nachteile. Das Befahren des Prüfstandes mit eigener Kraft erfordert eine Arbeitskraft. Die Art des Hineinschleppens mit Greifer verlangt neben den Prüfständen einen zusätzlichen Kanal. Darüberhinaus kann beispielsweise ein defektes Fahrzeug mit blockiertem Getriebe oder mit stark eingeschlagenen Vorderrädern, angezogener Handbremse, noch nicht eingestellter Achsgeometrie mit der Greifereinrichtung nicht transportiert werden, ebenso ist ein Transport der Fahrzeuge entgegen der Förderrichtung nicht möglich. Auch ist es bei einem derartigen Schleppen nicht auszuschließen, daß eine negative Beeinflussung am geschleppten Reifen oder an der Lenkgeometrie auftritt, wenn das Fahrzeug an einem Rad geklemmt über die Prüfstandsrollen geschleppt wird. Bei einem derartigen Hineinschleppen sind zusätzliche über Flur hinausragende Führungsrollen erforderlich.

Ausgehend hiervon liegt der Erfindung die Aufgabe zugrunde, unter Vermeidung der oben genannten Nachteile die eingangs genannte Fördervorrichtung so weiter zu entwickeln, daß ohne weitere Hilfsmittel ein beliebiges Ein- und Ausfahren in Prüfstände ermöglicht wird. Diese Aufgabe wird mit den kennzeichnenden Merkmalen des Anspruch 1 gelöst. Diese Aufgabe kann auch mit den kennzeichnenden Merkmalen des Anspruchs 2 in gleicher Weise gelöst werden. Durch das Hindurchführen der Fördereinrichtung durch den einzelnen Prüfstand treten keine Totzeiten auf und es kann entsprechend der Taktvorgabe, wie sie in der Serienfertigung gegeben ist, ein schonendes Absenken des zu untersuchenden Kraftfahrzeugs mit seinen Rädern auf eine Prüfstandsrolle oder bei Vorsehen von zwei Prüfstandsrollen pro Rad, das Rad gezielt zwischen die beiden Rollen abgesetzt werden. Nach beendeter Prüfung wird das Fahrzeug mit demselben Skid aus dem Prüfstand im Förderstrang weitertransportiert und zwar unabhängig von der Förderrichtung.

Die unter Schutz gestellten verschiebbaren Bleche im Skid gemäß Anspruch 2 dienen nicht nur als Transportunterlage zwischen den einzelnen Prüfständen, sondern sie dienen auch dazu, im Störfall das Kraftfahrzeug mit eigener Kraft aus dem Prüfstand fahren zu können oder auch dazu, das Fahrzeug entweder mit eigener Kraft oder durch eine andere Fördereinrichtung bewegt auf den Skid selbst aufzubringen oder von diesem zu entfernen.

Im Kennzeichen des Anspruchs 3 wird eine Ausgestaltung der Erfindung unter Schutz gestellt, die es ermöglicht, anstelle der bisher zwingend erforderlichen Hintereinanderanordnung von Prüfständen auch eine Nebeneinanderanordnung von Prüfständen zu konzipieren, ohne daß die zu prüfenden Kraftfahrzeuge ihre, bei der Serienfertigung einmal eingenommene lagemäßige Zuordnung zum Skid verändern müssen.

Die im Kennzeichen des Anspruchs 4 unter Schutz gestellten Förderbahnen zeigen, daß gleichzeitig ein Führung des Skids innerhalb des Prüfstands bewirkt werden kann, wenn die Spurkränze der Spurkranzrollen den Skid seitlich führen. Die Erfindung ist jedoch nicht auf diese Art von Förderbahnen eingeschränkt, es können auch andere Förderbahnen zum Transport des Skids vorgesehen sein, wie Gurtförderer und Kettenförderer als kontinuierliche Förderbahnen oder Hubzylinder als diskontinuierliche Förderbahnen.

Der in Anspruch 5 unter Schutz gestellte Eigenantrieb ist insbesondere zur genauen Positionierung des auf dem Skid befindlichen Kraftfahrzeuges im Prüfstand von Vorteil.

Anspruch 6 zeigt eine Ausgestaltung der Erfindung, wobei anstelle von Spurkranzrollen glatte Rollen mit seitlichen Führungsleisten vorgesehen sind.

Anspruch 7 lehrt die das Kraftfahrzeug tragenden Stützen mit dem Skid zu verbinden und den Skid im Prüfstand abzusenken. Oder die Stützen einschließlich Skid mit dem Kraftfahrzeug zu verbinden und mit den Prüfstandsrollen soweit gegen die Räder des Kraftfahrzeuges hochzufahren bis der Skid von der Förderbahn freikommt, der Skid bleibt in diesem Falle auch während der Prüfung mit dem Kraftfahrzeug verbunden. Hierbei kann nach dem Prüfvorgang der Skid erfindungsgemäß als stabile Orientierungshilfe für eine richtige Lage des Fahrzeuges auf der Förderbahn dienen ; am Skid können im Gegensatz zu einer Orientierung am Kraftfahrzeug selbst wesentlich kräftigere Richteinrichtungen ohne die Gefahr einer Beschädigung des Kraftfahrzeugs eingesetzt werden. Durch die in der Einleitung genannten Prüfungen, die auf Prüfständen durchgeführt werden, ist es nicht auszuschließen, daß sich die Längsachse des Kraftfahrzeuges zur Längsachse der Förderbahn verschiebt und somit parallel und/oder schräg zu dieser steht. Würde das Kraftfahrzeug in dieser Lage weitertransportiert, wären zumindest Stockungen auf der Förderbahn nicht zu vermeiden; sogar Beschädigungen am Kraftfahrzeug und an den Prüfständen wären nicht auszuschließen.

Anspruch 8 lehrt wie in Ausgestaltung des erfindungsgemäßen Skids, gemäß Anspruch 2 im Bereich der Prüfrollen ein sicheres Absenken des zu untersuchenden Kraftfahrzeugs durchgeführt werden kann.

Die in Anspruch 9 unter Schutz gestellte Ausgestaltung lehrt wie durch Ausgestaltung der geschlitzten Bleche eine sichere Führung und Halterung des zu untersuchenden Kraftfahrzeugs, während des Transports und beim Abbremsen und Beschleunigen des Skids ermöglicht wird. Äquivalent zu der in Anspruch 9 unter Schutz gestellten konkaven Wölbung sind auch winkelig verformte Bleche quer zur Förderrichtung und Bleche, die mit Erhöhungen quer zur Förderrichtung versehen sind.

Gegenstand des Anspruchs 10 ist die Teilung derartiger Bleche und Anspruch 11 hat zum Gegenstand die Ausgestaltung der erfindungsgemäßen Hubstangen zum Unterstützen der Kraftfahrzeugräder beim Wegziehen der Bleche; die Zugvorrichtungen werden mit den kennzeichnenden Merkmalen der Ansprüche 12 und 13 unter Schutz gestellt.

Anspruch 14 stellt eine noch weitere Ausgestaltung des Erfindungsgegenstandes unter Schutz, bei dem durch Anordnen von Richteinrichtungen am Prüfstand nach dem Prüfvorgang das Fahrzeug allein oder in Verbindung mit dem Skid wieder in die Förderrichtung ausgerichtet werden kann.

In der nachfolgenden Zeichnung wird die Erfindung näher erläutert :

Es zeigen :

Figur 1 schematisch einen Förderstrang zur Erläuterung der erfindungsgemäßen Fördereinrichtung

Figur 2 schematisch einen Schnitt durch eine heb- und senkbare Förderbahn mit einem darauf befindlichen erfindungsgemäß ausgestalteten Skid mit Tragarmen

Figur 3a schematisch eine Frontansicht und

Figur 3b schematisch eine Seitenansicht, teilweise geschnitten, durch eine Förderbahn mit darauf befindlichem, erfindungsgemäß ausgestaltetem Skid mit verschiebbaren Blechen.

Figur 4 Schematisch ein Kraftfahrzeug in einem Rollenprüfstand, wobei die linke Seite der Fig. 4 den Zustand darstellt, bei dem der Skid während der Prüfung am Kraftfahrzeug verbleibt und die rechte Seite der Zeichnung den Zustand darstellt bei dem der Skid während der Prüfung abgesenkt wird.

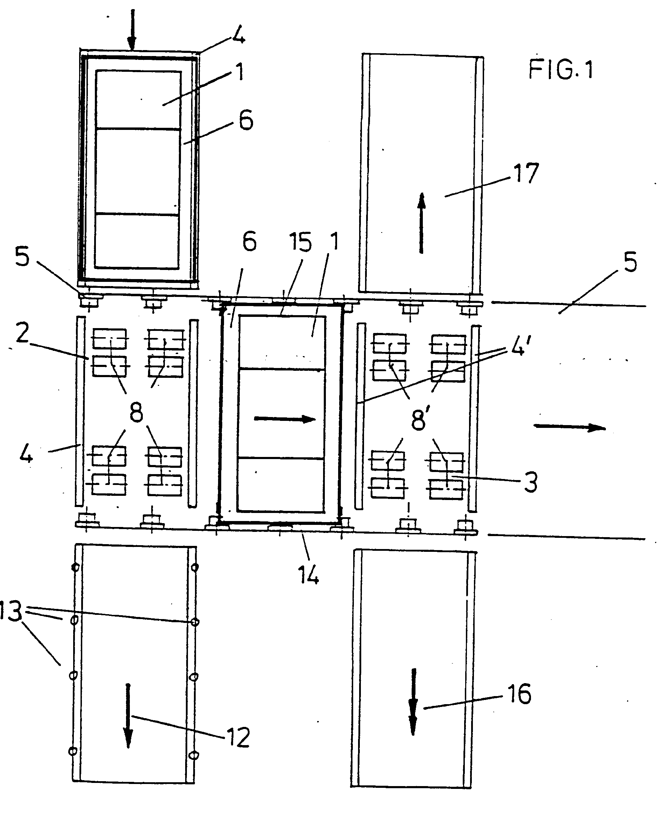

Fig. 1 zeigt einen Förderstrang bei dem eine Förderung der zu untersuchenden Kraftfahrzeuge 1 in Prüfständen 2, 3 durchgeführt werden kann, die in Förderrichtung der Förderbahn 4 angeordnet sind oder in einer Rollenbahn 5, die senkrecht zur Förderbahn 4 verläuft. Im Ausführungsbeispiel besteht die Förderbahn 4 aus Gurtförderern und die Rollenbahn 5 aus Spurkranzrollen, auf denen jeweils ein Skid 6 mit den darauf gelagerten Kraftfahrzeugen 1 geführt transportiert wird.

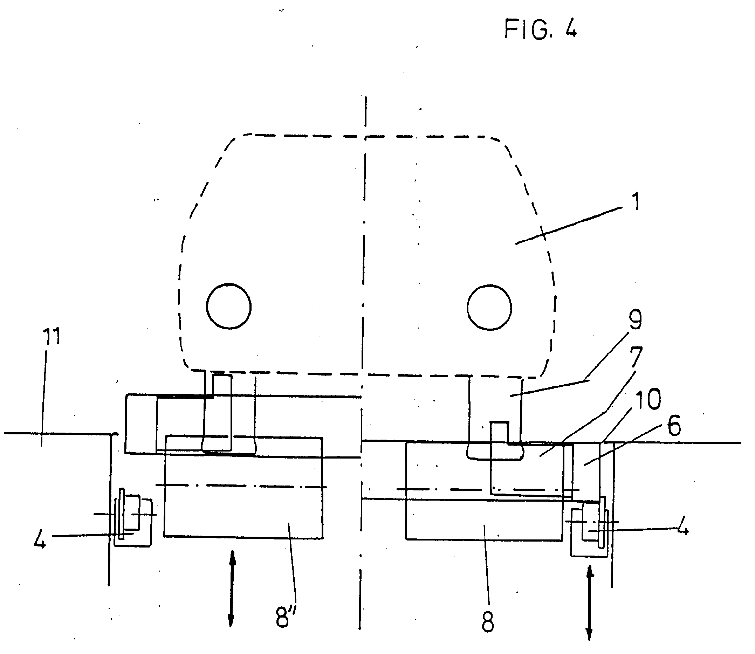

Ehe der Skid 6 mit dem Kraftfahrzeug 1 in den Prüfstand 2 einfährt, wird die Rollenbahn 5 soweit abgesenkt, daß der Skid ungehindert auf der Förderbahn 4, die den Prüfstand 2 links und rechts einschließt, entlang bewegt werden kann. Nach Abbremsen des Skid 6 werden Förderbahn 4 und Rollenbahn 5 soweit abgesenkt, daß, vgl. Fig. 4, das Kraftfahrzeug 1 vom Skid 6 und den Stützen 7 freikommt und zwischen je einem Rollenpaar 8 des Prüfstands 2 pro Kraftfahrzeugrad 9 antreibbar eingelagert wird. Dabei ist in Fig. 4 rechts dargestellt, wie eine durch das Absenken der Förderbahn 4 entstehende Vertiefung 10 im Hallenboden 11 durch die Oberkante des Skid 6 ausgefüllt wird, so daß durch das Absenken keine zu Unfällen führende Vertiefung bleibt.

Nach beendeter Prüfung im Prüfstand 2 kann das Kraftfahrzeug 1 entweder in der einmal eingenommenen Richtung weiter gemäß Pfeil 12 transportiert werden, wobei Führungsrollen 13 den Skid führen oder es kann der mit dem Kraftfahrzeug 1 beladene Skid 6 durch Anheben der Rollenbahn 5 unter Beibehaltung der Ausrichtung des Kraftfahrzeugs 1 senkrecht zur Förderbahn 4 auf der Rollenbahn 5 zu einem zweiten Prüfstand 3 transportiert werden. Hierbei unterfaßt die Rollenbahn 5 die vordere und hintere Kante 14, 15 des Skid 6. Beim Einfahren des Skid 6 in den Prüfstand 3 wird die Förderbahn 4' abgesenkt, so daß ein Einfahren in den Prüfstand 3 und zwar in Achsrichtung der Rollenpaare 8 erfolgen kann. Durch weiteres Absenken der Rollenbahn 5 und der Förderbahn 4' gelangt das Kraftfahrzeug 1, wie zu Fig. 4, rechte Seite beschrieben, mit seinen Rädern zwischen die Rollenpaare 8 des Prüfstandes 3, nach beendeter Prüfung kann auch von hier aus das Kraftfahrzeug in Richtung der Förderbahn 4' oder in Richtung der Rollenbahn 5 zu einem weiteren Prüfstand

3

transportiert werden. Im Falle der Fig. 4, linke Seite, werden die Rollenpaare 8″ entsprechend dem Pfeil solange angehoben bis der Skid 6 von der Förderbahn 4 freikommt.

Auch ist es möglich, falls es sich hier um den letzten Prüfstand handelt, das Kraftfahrzeug 1 mit eigener Kraft aus dem Prüfstand 2 in Richtung des Doppelpfeiles 16 abzuziehen. Dieses Herausfahren aus dem angenommenen letzten Prüfstand ist insoweit sehr leicht durchzuführen, da der Skid 6, wie zu Fig. 4, rechte Seite beschrieben, im abgesenkten Zustand, entstehende Vertiefungen 10 im Hallenboden selbst abdeckt. Gleiches gilt wenn ein erfindungsgemäßer Skid mit verschiebbaren Blechen verwendet wird, so kann durch Einführen der Bleche und Einlegen von Rampenstücken das Kraftfahrzeug ebenfalls mit eigener Kraft herausgefahren werden. Zufolge dieser erfinderischen Konzeptionen ist es auch bei einem Störfall möglich, bei abgesenktem Skid oder bei eingeschobenen Blechen mit eingelegten Rampenstücken das Kraftfahrzeug aus dem entsprechenden Prüfstand herauszufahren, ohne daß alle anderen Prüfstände blockiert werden müssen.

Eine völlige Blockierfreiheit der anderen Prüfstände beim Störfall eines einzelnen Prüfstandes ist dann vorhanden, wenn wie in Fig. 1 dargestellt, alle Prüfstände senkrecht zur Förderbahn 4 angeordnet sind und die Rollenbahn 5 die Prüfstände quer durchläuft. Es ist offensichtlich, daß eine derart erfindungsgemäß ausgestaltete Führung der Förderbahn quer durch die Prüfstände, wobei die Kraftfahrzeuge auf den Skids quer zu ihrer Fahrtrichtung transportierbar sind, eine beachtliche Vereinfachung bei erforderlich werdenden zusätzlichen Arbeiten bringt. So kann wie in Fig. 1 beim Rollenprüfstand 3 erfindungsgemäß dargestellt, hinter diesem ein Arbeitsplatz 17 angeordnet sein, in den das zu bearbeitende Kraftfahrzeug 1 mit seinem Skid 6 ausgeschleust wird, ohne daß hierdurch eine Stockung im Fertigungsfluß geschieht. Einen derart erfindungsgemäßen Arbeitsplatz mit einem Prüfstand zu verketten, ohne daß der Fertigungsstrom blockiert wird, ist erst durch den erfindungsgemäßen Quertransport möglich geworden.

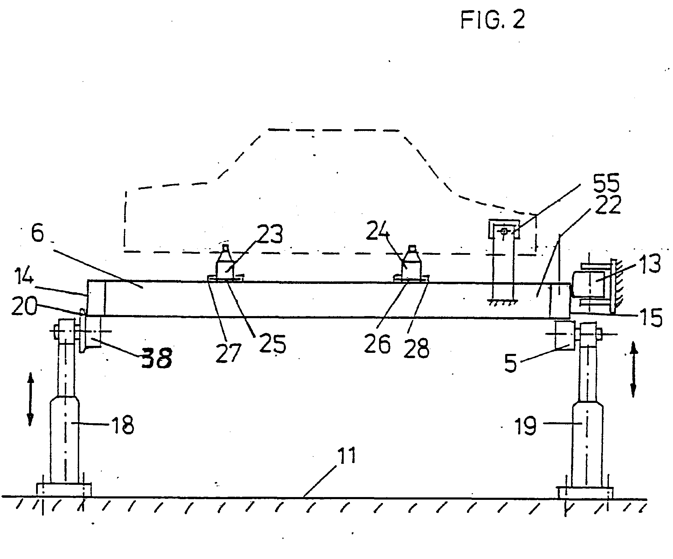

Der in Fig. 2 dargestellte Schnitt durch eine heb- und senkbare Rollenbahn zeigt schematisch auch einen Skid im Längsschnitt. Die Rollenbahn 5 ist über bewegliche Stützen 18, 19 auf dem Hallenboden 11 aufgeständert. Der Skid 6 wird an seiner vorderen und hinteren Kante 14, 15 an den Spurkränzen 20 der Rollenbahnen 5 geführt transportiert. Der Skid 6 wird von einem Hohlprofil 22, welches die Umrandung des Skid 6 bildet, umschlossen. Auf Grund dieser Konstruktion wird es möglich, ohne Veränderung der Rollenbahn den Skid 6 sowohl entlang der Förderbahn 4 bzw. 4′, vgl. Fig. 1, oder quer dazu, über die Rollenbahn 5 mit seinen beiden anderen Holmseiten zu transportieren. An den Holmen 22 sind Stützen 7 angeordnet, vgl. Fig. 4, rechts, oder wie in Fig. 2 dargestellt, lösbare Stützen 23, 24 vorgesehen. Im einfachsten Falle sind die Stützen 23, 24 mit ihrem Fußteil 25, 26 in Halterungen 27, 28 gelagert.

Im Falle des Verbleibens des Skid 6 am Kraftfahrzeug auch während der Prüfung auf dem Rollenprüfstand, vgl. Fig. 4, links, übernehmen die in Fig. 2 dargestellten Stützen 23, 24 die Funktion der Halterung des Skid 6 am Kraftfahrzeug. Durch Anheben der Prüfrollen 8″, vgl. Fig. 4, links, wird das Fahrzeug und der mit diesem fest verbundene Skid 6 angehoben und zwar soweit bis der Skid 6 von der Rollenbahn 4, 4′ bzw. 5 freikommt.

Wie oben bereits ausgeführt wird durch die Prüfung auf dem Prüfstand das Kraftfahrzeug 1, einschließlich angehobenem Skid ebenfalls aus seiner geraden Fahrlage auswandern und parallel und/oder schräg im Prüfstand nach beendeter Prüfung zur Ruhe kommen. Um nun den am Fahrzeug befindlichen Skid zur Rollenbahn 5 auszurichten sind im jeweiligen Prüfstand rechts und links erfindungsgemäß Richteinrichtungen, also stationär vorgesehen. Diese Richteinrichtungen können aus Pneumatikzylindern bestehen oder es können auch elektromechanisch betriebene Schubstangen hierfür eingesetzt werden.

In Fig. 2 ist noch eine Führungsrolle 13 dargestellt, die jedoch für den Transport des Skid 6 auf Spurkranzrollen 38 nicht erforderlich ist, da in diesem Falle die Spurkränze 20 die Führung übernehmen ; jedoch im Falle des Transports des Skids 6 mittels Förderbändern sind zur seitlichen Führung des Skids, Führungsrollen 13 mit vertikaler Achse, wie sie auch in Fig. 1 dargestellt sind, erforderlich.

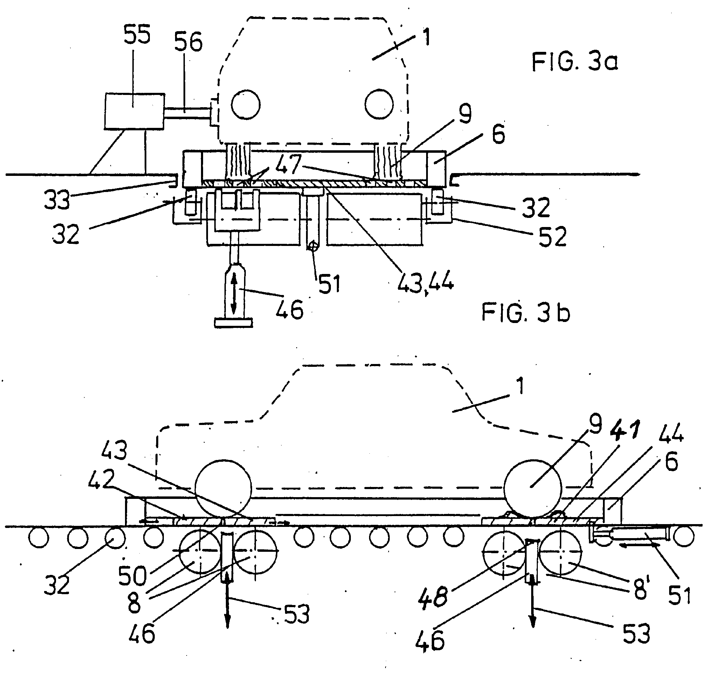

Bei dem in Fig. 3a und 3b dargestellten erfindungsgemäßen Skid mit verschiebbaren Blechen wird das Kraftfahrzeug 1 über Rollen 32, die mit Führungsleisten 33, die im Hallenboden verlegt sind, auf dem Skid 6, der mit verschiebbaren Blechen 43, 44 zum Verschließen der Durchtrittsöffnungen 41, 42 für die Kraftfahrzeugräder 9 ausgestattet ist, in einen Doppelrollenprüfstand (vgl. Fig. 3b) hineintransportiert. Nach dem positionierten Anhalten des Skid 6, wobei die Kraftfahrzeugräder 9 jeweils in der Mitte über den beiden Prüfstandsrollenpaaren 8 bzw. 8′ stehen, werden Hubstangen 46, entsprechend Doppelpfeil 53 angehoben und durchdringen Schlitze 47 in den verschiebbaren Blechen 43, 44. Damit kommen die Hubstangen 46 mit ihren Enden 48, die vorzugsweise konkav ausgebildet sind, in Wirkverbindung mit den Reifenoberflächen der Kraftfahrzeugräder 9. Durch weiteres Anheben der Hubstangen 46 kommen die verschiebbaren Bleche 43, 44, die gemäß Fig. 3b konkav ausgestaltet sind, frei und können mittels Zugeinrichtungen 51, die vorzugsweise in der Nähe der Prüfstandsrollen 8, 8′ angeordnet sind, unter den Kraftfahrzeugrädern entlang der Schlitze 47 weggezogen werden, wodurch die Öffnungen 41, 42 freigegeben werden.

Im Falle der konkaven Ausgestaltung sind die verschiebbaren Bleche 43, 44 in der Mitte 50 geteilt, so daß wie in Fig. 3b dargestellt, entsprechend den Pfeilrichtungen die verschiebbaren Bleche auseinandergezogen werden. Da verschiedene Fertigungsreihen von Kraftfahrzeugen über derartige Prüfstände transportiert werden, wird es als eine Ausgestaltung der Erfindung angesehen, daß die in der Mitte 50 geteilten Bleche für die Vorder- und Hinterräder des Kraftfahrzeugs konkav ausgestaltet sind um das Kraftfahrzeug in Förderrichtung eindeutig festzuhalten, während die das andere Räderpaar unterstützenden verschiebbaren Bleche 43 bzw. 44 nicht arretierend, also eben ausgebildet sind, um hiermit mit geringem Aufwand auch beim Transport von Kraftfahrzeugen verschiedener Radstände ein Befahren des jeweiligen Prüfstands ermöglichen zu können.

Nachdem die verschiebbaren Bleche 43, 44 die Durchtrittsöffnungen 41, 42 freigegeben haben, senken sich die Hubstangen 46 gemäß Doppelpfeil 53 ab, so daß die Kraftfahrzeugräder 9 zwischen den Rollenpaaren 8 bzw. 8′ zur Ruhe kommen. Durch das Absenken besteht auch keine Verbindung mehr zwischen dem Kraftfahrzeug 1 und dem Skid 6, obwohl der Skid 6 ohne abgesenkt zu werden im Prüfstand während der Prüfung verbleibt. Es ist,jedoch auch möglich wie zu Fig. 2 beschrieben, zusätzlich die Rollen 32 abzusenken.

Nachdem die Prüfung des Kraftfahrzeuges stangefunden hat, werden zunächst die Hubstangen 46 gegen die Kraftfahrzeugräder 9 vorgefahren, das Kraftfahrzeug 1 mit Hilfe der Hubstangen 46 so weit angehoben, daß die verschiebbaren Bleche 43, 44 geführt an den Hubstangen 46 mittels der Schlitze 47 die Durchtrittsöffnungen 41, 42 verschließen. Anschließend werden die Hubstangen 46 wieder zurückgefahren, zwischen die beiden Rollenpaare 8 bzw. 8′ und das Kraftfahrzeug 1 kann, nachdem es mit einer schematisch dargestellten Richteinrichtung 55, die im Prüfstand links und rechts angeordnet ist und die eine elektromechanisch betriebene Schubstange 56 trägt, entsprechend ausgerichtet ist, zum nächsten Prüfstand transportiert oder wenn es sich um den letzten Prüfstand handelt, ohne Einsatz der Richteinrichtung 55 mit eigener Kraft aus dem Prüfstand über die verschiebbaren Bleche 43, 44 herausfahren, wenn Rampen vorgesehen sind.

## Patentansprüche

1. Fördereinrichtung mit auf Förderbahnen (4, 4′, 5) bewegten, angetriebenen Mitnehmern zum Transport zu prüfender Kraftfahrzeuge (1) zwischen Prüfständen (2, 3), dadurch gekennzeichnet, daß die Mitnehmer als Skids (6) ausgebildet sind, daß jeder Skid (6) von einem rechteckigen Hohlprofil (22), welches die Umrandung des Skid (6) bildet, umschlossen wird, daß die Kraftfahrzeuge (1) auf dem einzelnen Skid (6) durch die einzelnen Prüfstände (2 bzw. 3) in Fahrtrichtung und quer dazu transportierbar sind, wobei während der Prüfung des Kraftfahrzeugs (1) der Skid (6) ebenfalls im Prüfstand (2, 3) verbleibt, daß der Skid Durchtrittsöffnungen (41, 42) für den Durchtritt der Prüfstandsrollen (8, 8′, 8″) oder der Kraftfahrzeugräder (9) besitzt, daß der Skid mit Stützen (7 bzw. 23, 24) für die Aufnahme des Kraftfahrzeuges ausgerüstet ist und daß die Förderbahnen (4,4′,5) im Prüfstand (2,3) heb- und senkbar sind.

2. Fördereinrichtung mit auf Förderbahnen (4, 4′, 5) bewegten, angetriebenen Mitnehmern zum Transport zu prüfender Kraftfahrzeuge (1) zwischen Prüfständen (2, 3), dadurch gekennzeichnet, daß die Mitnehmer als Skids (6) ausgebildet sind, daß jeder Skid (6) von einem rechteckigen Hohlprofil (22), welches die Umrandung des Skid (6) bildet, umschlossen wird, daß die Kraftfahrzeuge (1) auf dem einzelnen Skid (6) durch die einzelnen Prüfstände (2 bzw. 3) in Fahrtrichtung und quer dazu transportierbar sind, wobei während der Prüfung des Kraftfahrzeugs (1) der Skid (6) ebenfalls im Prüfstand (2, 3) verbleibt, daß der Skid Durchtrittsöffnungen (41, 42) für den Durchtritt der Prüfstandsrollen (8, 8′, 8″) oder der Kraftfahrzeugräder (9) besitzt, daß im Skid (6) verschiebbare Bleche (43, 44) zum Verschließen der Durchtrittsöffnungen (41, 42) für die Kraftfahrzeugräder (9) vorgesehen sind und daß die Förderbahnen (4,4′,5) im Prüfstand (2,3) heb- und senkbar sind.

3. Fördereinrichtung nach Anspruch 1 oder 2, dadurch gekennzeichnet, daß bei nebeneinander angeordneten Prüfständen (2, 3) sich die Förderbahn (5) quer durch die Prüfstände (2, 3) erstreckt und daß die zu prüfenden Kraftfahrzeuge (1) auf dem Skid (6) quer zu ihrer Fahrtrichtung transportiert werden.

4. Fördereinrichtung nach Anspruch 3 dadurch gekennzeichnet, daß innerhalb der Prüfstände (2, 3) Spurkranzrollen (38) die Förderbahn (5) bilden.

5. Fördereinrichtung nach Anspruch 4, dadurch gekennzeichnet, daß die Spurkranzrollen (38) antreibbar sind.

6. Fördereinrichtung nach Anspruch 3 dadurch gekennzeichnet, daß innerhalb der Prüfstände (2, 3) Rollen (32) mit seitlichen Führungsleisten (33) zur Führung des Skids (6) vorgesehen sind.

7. Fördereinrichtung nach einem der Ansprüche 1, 3, 4, 5, 6, dadurch gekennzeichnet, daß die Stützen (23, 24) lösbar mit dem Skid (6) und mit dem Kraftfahrzeug (1) verbunden sind.

8. Fördereinrichtung nach Anspruch 2, dadurch gekennzeichnet, daß die verschiebbaren Bleche (43, 44) Schlitze (47) tragen und daß zwischen den Rollenpaaren (8 bzw. 8' bzw. 8″) vertikal bewegliche Hubstangen (46) vorgesehen sind, die die verschiebbaren Bleche (43, 44) im Bereich der Schlitze (47) durchdringen.

9. Fördereinrichtung nach Anspruch 2 und 8, dadurch gekennzeichnet, daß mindestens ein geschlitztes Blech (43 bzw. 44) in Förderrichtung auf seiner Tragseite konkav gewölbt (49) ist.

10. Fördereinrichtung nach Anspruch 9, dadurch gekennzeichnet, daß das konkav gewölbte Blech (49) quer zur Förderrichtung in der Mitte (50) geteilt ist.

11. Fördereinrichtung nach einem der Ansprüche 2, 8, 9, 10, dadurch gekennzeichnet, daß die Hubstangen (46) an ihren, dem Kraftfahrzeugrad (9) zugewandten Ende (48) zur Unterstützung der Reifenoberfläche in Fahrtrichtung konkav ausgebildet sind.

12. Fördereinrichtung nach einem der Ansprüche 2, 8, 9, 10, 11 dadurch gekennzeichnet, daß am Prüfstand Zugeinrichtungen (51) für die Bewegung der verschiebbaren Bleche (43, 44) im Skid (6) vorgesehen sind.

13. Fördereinrichtung nach Anspruch 10, dadurch gekennzeichnet, daß am Prüfstand zwei Zugeinrichtungen für die Bewegung der konkav gewälbten geteilten Bleche (48) vorgesehen sind.

14. Fördereinrichtung nach einem der vorhergehenden Ansprüche, dadurch gekennzeichnet, daß am Prüfstand seitlich Richteinrichtungen (55) angeordnet sind.

## Claims

1. Conveying installation with driven carriers moved on conveyor tracks (4,4',5) for the transport between test stands (2,3) of motor vehicles (1) which are to be tested, characterised in that the carriers are constructed as skids (6), in that each skid (6) is enclosed by a rectangular hollow section member (22), which forms the edge of the skid (6), in that the motor vehicles (1) can be transported on the individual skid (6) through the individual test stands (2 or 3) in the direction of travel and transversely thereto, wherein during the testing of the motor vehicles (1) the skid (6) also remains in the test stand, in that the skid (6) has through holes (41, 42) for passage of the test stand rollers (8,8',8″) or the motor vehicle wheels (9), in that the skid is provided with supports (7 or 23, 24) for receiving the motor vehicle and in that the conveyor tracks (4,4' 5) can be raised and lowered in the test stand (2,3).

2. Conveying installation with driven carriers moved on conveyor tracks (4,4',5) for the transport between test stands (2,3) of motor vehicles (1) which are to be tested, characterised in that the carriers are constructed as skids (6), in that each skid (6) is enclosed by a rectangular hollow section member (22), which forms the edge of the skid (6), in that the motor vehicles (1) can be transported on the individual skid (6) through the individual test stands (2 or 3) in the direction of travel and transversely thereto, wherein during the testing of the motor vehicles (1) the skid (6) also remains in the test stand, in that the skid (6) has through holes (41, 42) for passage of the test stand rollers (8,8',8″) or the motor vehicle wheels (9), in that displaceable plates (43, 44) are provided in the skid (6) for closing the through holes (41,42) for the motor vehicle wheels (9), and in that the conveyor tracks (4,4,',5) can be raised and lowered in the test stand (2,3).

3. Conveying installation according to claim 1 or 2, characterised in that with test stands (2,3) arranged adjacent to each other, the conveyor track (5) extends transversely through the test stands (2,3) and that the motor vehicles (1) which are to be tested are transported on the skid (6) transversely to their direction of travel.

4. Conveying installation according to claim 3, characterised in that within the test stands (2,3) flanged rollers (38) form the conveyor tracks (5).

5. Conveying installation according to claim 4, characterised in that the flanged rollers (38) are drivable.

6. Conveying installation according to claim 4, characterised in that within the test stands (2,3) rollers (32) are provided with lateral guide strips (33) for guiding the skid (6).

7. Conveying installation according to any one of claims, 1, 3, 4, 5, 6 characterised in that the supports (23, 24) are releasably connected with the skid (6) and with the motor vehicle (1).

8. Conveying installation according to claim 2 characterised in that the displaceable plates (43, 44) have slots (47) and in that between the roller pairs (8 or 8' or 8″) vertically movable lifting rods (48) are provided, which pass through the displaceable plates (43, 44) in the region of the slots (47).

9. Conveying installation according to claim 2 and 8, characterised in that at least one slotted plate (43 or 44) is concavely curved (49) on the supporting side in the conveying direction.

10. Conveying installation according to claim 9, characterised in that the concavely curved plate (49) is divided in the centre (50) transverse to the conveying direction.

11. Conveying installation according to any one of claims 7, 8, 9, 10 characterised in that the connecting rods (46) are constructed concave at their end (48) facing the motor vehicle wheel (9) to support the tyre surface in the direction of travel.

12. Conveying installation according to any one of claims 7, 8, 9, 10, 11, characterised in that at the test stand there are provided drawing mechanisms (51) for the movement of the displaceable plates (43, 44) in the skid (6).

13. Conveying installation according to claim 10, characterised in that at the test stand there are provided two drawing mechanisms for the movement of the concavely curved divided plates (48).

14. Conveying installation according to any one of the preceding claims, characterised in that at the test stand there are provided lateral adjusting mechanisms (55).

**Revendications**

1. - Installation de manutention comportant des organes d'entraînement commandés, se déplaçant sur des convoyeurs (4, 4', 5), destinés à la manutention de véhicules automobiles (1) à contrôler, entre des bancs d'essais (2, 3), caractérisée en ce que les dispositifs d'entraînement sont conformés en skids (6), en ce que chaque skid (6) est entouré par un profilé creux (22) polygonal, qui forme le pourtour du skid (6), en ce que les véhicules automobiles (1) sont transportables sur le skid (6) spécifique, en passant aux différents bancs d'essais (2 ou 3), dans la direction du transport et transversalement à cette direction, le skid (6) restant également au banc d'essai (2, 3), pendant le contrôle du véhicule automobile (1), en ce que le skid est muni d'ouvertures de passage (41, 42) pour faire passer les rouleaux de banc d'essai (8, 8', 8″) ou les roues de véhicule automobile (9), en ce que le skid est équipé d'appuis (7, ou 23, 24) pour recevoir le véhicule automobile et en ce que les pistes de transport (4, 4', 5) peuvent être levées et baissées dans le banc d'essai (2, 3).

2. - Installation de manutention comportant des organes d'entraînement commandés, se déplaçant sur des convoyeurs (4, 4', 5), destinés à la manutention de véhicules automobiles (1) à contrôler, entre des bancs d'essais (2, 3), caractérisée en ce que les dispositifs d'entraînement sont conformés en skids (6), en ce que chaque skid (6) est entouré par un profilé creux (22) polygonal, qui forme le pourtour du skid (6), en ce que les véhicules automobiles (1) sont déplaçables sur le skid (6) spécifique, en passant aux différents bancs d'essais (2, ou 3), dans la direction du transport et transversalement à cette direction, le skid (6) restant également au banc d'essai (2,3) pendant le contrôle du véhicule automobile (1), en ce que le skid est muni d'ouvertures de passage (41, 42) pour faire passer les rouleaux de banc d'essai (8, 8', 8″) ou les roues de véhicule automobile (9), en ce que des tôles (43, 44) déplaçables sont prévues dans le skid (6) en vue d'obturer les ouvertures de passage (41, 42) pour les roues de véhicule automobile (9), et en ce que les pistes de transport (4, 4', 5) peuvent être levées et baissées dans le bac d'essai (2, 3).

3. - Installation de manutention selon la revendication 1 ou 2, caractérisée en ce que, dans le cas où les bancs d'essai (2, 3) sont disposés les uns à côté des autres, la piste de transport (5) s'étend transversalement à travers les bancs d'essai (2, 3) et en ce que les véhicules automobiles (1) à contrôler sont transportés sur le skid (6), perpendiculairement à leur sens de marche.

4. - Installation de manutention selon la revendication 3, caractérisée en ce que, à l'intérieur des bancs d'essai (2, 3), le convoyeur (5) est constitué de rouleaux à boudin (38).

5. - Installation de manutention selon la revendication 4, caractérisée en ce que les rouleaux à boudin (38) peuvent être commandés.

6. - Installation de manutention selon la revendication 3, caractérisée en ce qu'il est prévu, à l'intérieur des bancs d'essai (2, 3), des rouleaux (32) comportant des bandes de guidage (33) pour le guidage du skid (6).

7. - Installation de manutention selon l'une quelconque des revendications 1, 3, 4, 5 et 6, caractérisée en ce que les supports (23, 24) sont assemblés au skid (6) et au véhicule automobile (1), de façon amovible.

8. - Installation de manutention selon la revendication 2, caractérisée en ce que les tôles mobiles (43, 44) présentent des fentes (47) et en ce qu'il est prévu, entre les paires de rouleaux (8, 8′ ou 8″) des tiges de levage (46) se déplaçant verticalement, qui traversent les tôles mobiles (43, 44) par les fentes (47).

9. - Installation de manutention selon les revendications 2 et 8, caractérisé en ce qu'au moins une tôle fendue (43 ou 44) est concave (49) dans le sens de convoyage, sur sa face portante.

10. - Installation de manutention selon la revendication 9, caractérisé en ce que la tôle concave (49) est divisée au centre (50), perpendiculairement à la direction de convoyage.

11. - Installation de manutention selon l'une quelconque des revendications 2, 8, 9 et 10, caractérisée en ce que les extrémités (48) des tiges de levage (46), tournées vers la roue du véhicule, sont concaves, dans le sens de la marche, pour soutenir la surface du pneu.

12. - Installation de manutention selon l'une quelconque des revendications 2, 8, 9, 10 et 11, caractérisée en ce qu'il est prévu au banc d'essai, des dispositifs de traction (51) pour le déplacement des tôles mobiles (43, 44) du skid (6).

13. - Installation de manutention selon la revendication 10, caractérisée en ce qu'il est prévu au banc d'essai, deux dispositifs de traction pour le déplacement des tôles concaves en deux parties (48).

14. - Installation de manutention selon l'une quelconque des revendications précédentes, caractérisée en ce que des dispositifs de direction (55) sont montés latéralement au banc d'essai.

FIG.1

FIG. 2

FIG. 3a

FIG. 3 b

EP 0 134 255 B2

FIG. 4